# EUROPEAN PATENT APPLICATION

(11) **EP 2 897 010 A2**
(43) Date of publication of application: **22.07.2015**
(21) Application number: 13805047.1
(22) Date of filing: 01.08.2013
(51) Int. Cl.: G05B 19/418

(54) **INDUSTRIAL CONTROL SYSTEM AND MANAGEMENT DEVICE**

(30) Priority: 14.09.2012 CN 201210341409
(71) Applicant: ZTE Corporation, Shenzhen, Guangdong 518057 (CN)
(72) Inventor: HE, Ying, Shenzhen Guangdong 518057 (CN); YI, Xingwang, Shenzhen Guangdong 518057 (CN)
(74) Representative: Benson, Christopher
(86) International application number: PCT/CN2013/080645
(87) International publication number: WO 2013/185713

(57) **Abstract**

An industrial control system and a management apparatus are disclosed. The industrial control system includes: a control terminal and a management apparatus, wherein the control terminal is configured to collect production data of a production object in a production process, and transmit the production data to the management apparatus; and receive first control data transmitted by the management apparatus, and control the production object according to the first control data; and the management apparatus is connected with the control terminal via the Internet of Things, and is configured to receive and store the production data transmitted by the control terminal, and issue the first control data for controlling the production object to the control terminal.

## Description

### Technical Field

The present invention relates to the field of industrial control, and in particular, to an industrial control system and a management apparatus.

### Background of the Related Art

At present, in the field of industrial control, the manner of achieving networking and control in a production process is generally described as follows:
1. A control system includes a control device, a production control object, and an industrial field bus. With respect to a small-scale production process or a production process for a single object, a monolithic control mode is used. I.e., a control device controls a production object. With respect to a large-scale production process or a production process for a complex object, multiple control devices may be connected using an industrial field bus, to achieve networking and production of a certain size.
2. The control device mostly transmits various real-time data (such as a temperature, a humidity, a voltage etc.) generated in the production process to the control device using an intelligent instrument, performs calculation through a control program in the control device, and then outputs a control quantity to control the production object.

Such traditional industrial networking manner and control manner have the following disadvantages:
1. With respect to the networking manner, regardless of unicontrol or networking control by connection via the industrial field bus, both of them belong to local networking by their natures, and various data information is primarily stored locally and is transferred in the range of the local networking. Therefore, it is relatively difficult to achieve large scale production control. In addition, there are various types of industrial field buses, the transmission protocols may also be different, and consequently, contact between different industrial networks becomes difficult.
2. At present, the core of the industrial control network is various intelligent instruments, i.e., the intelligent control devices. The core of the intelligent instrument is a control program, i.e., software. As the control objects are different, the control data in the intelligent instrument program may also be different, thereby resulting in failure in generalization of the intelligent control instruments at present. In addition, as the program is mostly solidified in a Central Processing Unit (CPU), it is relatively difficult to update or substitute the program in a traditional networking manner.

In conclusion, it is difficult for the traditional industrial control network to achieve large-scale intelligent control.

### Summary of the Invention

The embodiments of the present invention provide an industrial control system and a management apparatus, which can achieve large-scale cluster production.

The embodiments of the present invention provide an industrial control system, comprising: a control terminal and a management apparatus, wherein,
the control terminal is configured to collect production data of a production object in a production process, and transmit the production data to the management apparatus; and receive first control data transmitted by the management apparatus, and control the production object according to the first control data; and
the management apparatus is connected with the control terminal via the Internet of Things, and is configured to receive and store the production data transmitted by the control terminal, and issue the first control data for controlling the production object to the control terminal.

Alternatively, the management apparatus comprises an access terminal, a management platform, and a control model server; the access terminal is configured to receive the production data transmitted by the control terminal, and transmit the production data to the management platform;
the management platform is configured to receive and store the production data transmitted by the access terminal, and transmit the production data to a control model server corresponding to the control terminal; and
the control model server is configured to receive the production data transmitted by the management platform.

Alternatively, the control model server is further configured to transmit the first control data to the management platform;
the management platform is further configured to receive and store the first control data transmitted by the control model server, and transmit the first control data to the access terminal; and
the access terminal is further configured to receive the first control data transmitted by the management platform, and transmit the first control data to the control terminal.

Alternatively, the control model server is further configured to generate second control data for controlling the production object according to the received production data, and transmit the second control data to the management platform;
the management platform is further configured to receive and store the second control data transmitted by the control model server, and transmit the second control data to the access terminal;
the access terminal is further configured to receive the second control data transmitted by the management platform, and transmit the second control data to the control terminal; and
the control terminal is further configured to control the production object according to the received second control data.

Alternatively, the control terminal is further configured to transmit a data query request to the access terminal;
the access terminal is further configured to receive the data query request transmitted by the control terminal, and transmit the data query request to the management platform;
the management platform is further configured to receive the data query request transmitted by the access terminal, and return the data requested to be queried by the data query request to the access terminal; and
the access terminal is further configured to receive the data returned by the management platform, and return the data to the control terminal.

Alternatively, the control terminal is further configured to transmit a control data update request to the access terminal;
the access terminal is further configured to receive the control data update request transmitted by the control terminal, and transmit the control data update request to the management platform;
the management platform is further configured to transmit the control data update request to the control model server, receive third control data returned by the control model server, and transmit the third control data to the access terminal;
the access terminal is further configured to receive the third control data returned by the management platform, and return the third control data to the control terminal; and
the control terminal is further configured to control the production object according to the received third control data.

Alternatively, the access terminal is further configured to transmit an identity of itself and an identity of the control terminal connected to itself to the management platform; and
the management platform is further configured to receive and store the identity of the access terminal and the identity of the control terminal connected to the access terminal.

Alternatively, the access terminal is further configured to receive an access request transmitted by the control terminal, which carries the identity of the control terminal, and transmit the access request to the management platform;
the management platform is further configured to receive the access request transmitted by the access terminal, perform authentication according to the identity of the control terminal, and return an access response to the access terminal after the authentication is successful; and
the access terminal is further configured to receive the access response returned by the management platform, and transmit the access response to the control terminal.

Alternatively, the control terminal is connected to the access terminal via a serial bus.

Alternatively, the access terminal communicates with the management platform through an Internet of Things communication protocol.

The embodiments of the present invention further provide a management apparatus, comprising: an access terminal, a management platform, and a control model server, wherein,
the access terminal is configured to receive production data transmitted by the control terminal, transmit the production data to the management platform, receive first control data for controlling the production object transmitted by the management platform, and transmit the first control data to the control terminal;
the management platform is configured to receive and store the production data transmitted by the access terminal, transmit the production data to a control model server corresponding to the control terminal, receive and store the first control data transmitted by the control model server, and transmit the first control data to the access terminal; and
the control model server is configured to receive the production data transmitted by the management platform, generate the first control data according to the generated data, and transmit the first control data to the management platform.

Alternatively, the control model server is further configured to generate second control data for controlling the production object according to the received production data, and transmit the second control data to the management platform;
the management platform is further configured to receive and store the second control data transmitted by the control model server, and transmit the second control data to the access terminal; and
the access terminal is further configured to receive the second control data transmitted by the management platform, and transmit the second control data to the control terminal.

Alternatively, the access terminal is further configured to receive a data query request transmitted by the control terminal, and transmit the data query request to the management platform;
the management platform is further configured to receive the data query request transmitted by the access terminal, and return the data requested to be queried by the data query request to the access terminal; and
the access terminal is further configured to receive the data returned by the management platform, and return the data to the control terminal.

Alternatively, the access terminal is further configured to receive a control data update request transmitted by the control terminal, and transmit the control data update request to the management platform;
the management platform is further configured to transmit the control data update request to the control model server, receive third control data returned by the control model server, and transmit the third control data to the access terminal; and
the access terminal is further configured to receive the third control data returned by the management platform, and return the third control data to the control terminal.

Alternatively, the access terminal is further configured to transmit an identity of itself and an identity of the control terminal connected to itself to the management platform; and
the management platform is further configured to receive and store the identity of the access terminal and the identity of the control terminal connected to the access terminal.

Alternatively, the access terminal is further configured to receive an access request transmitted by the control terminal, which carries the identity of the control terminal, and transmit the access request to the management platform;
the management platform is further configured to receive the access request transmitted by the access terminal, perform authentication according to the identity of the control terminal, and return an access response to the access terminal after the authentication is successful; and
the access terminal is further configured to receive the access response returned by the management platform, and transmit the access response to the control terminal.

In the scheme of the embodiments of the present invention, a networking mode of the traditional industrial control system is changed, and the traditional industrial network is substituted with the Things of Internet, so that the networking manner is more convenient; in the production process, the production data is not limited to be stored locally and transmitted, and the production data can be uploaded to a unified management platform through the communication network, which facilitates unified management, so that larger-scale cluster production becomes possible; and a unified communication protocol is used to enable various types of production networks to communicate with each other, which facilitates compatibility of the production networks.

### Brief Description of Drawings

Fig. 1 is a structural diagram of an industrial control system according to an embodiment of the present invention; and
Fig. 2 is a diagram of data transmission of an industrial control system according to an embodiment of the present invention.

### Preferred Embodiments of the Present Invention

The embodiments of the present invention will be described in detail below in conjunction with accompanying drawings. It should be illustrated that without a conflict, the embodiments in the present application and the features in the embodiments can be combined with each other randomly.

With respect to the problem in the related art that it is difficult for the industrial control network to achieve large-scale intelligent control, the embodiments of the present invention provide an industrial control system, which can achieve large-scale cluster production.

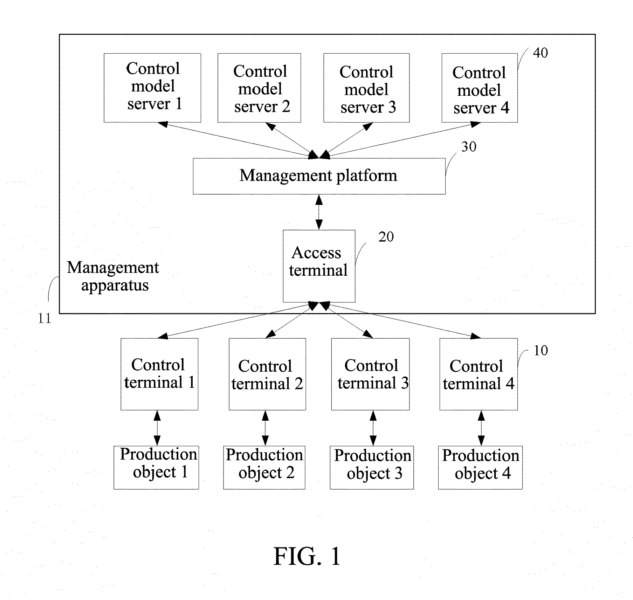

The embodiments of the present invention provide an industrial control system, to control a production object. As shown in Fig. 1, the industrial control system according to the present embodiment includes: a control terminal 10 and a management apparatus 11, wherein,
the control terminal 10 is configured to collect production data of a production object in a production process, and transmit the production data to the management apparatus 11; and receive first control data transmitted by the management apparatus 11, and control the production object according to the first control data; and
the management apparatus 11 is connected with the control terminal 10 via the Internet of Things, and is configured to receive and store the production data transmitted by the control terminal 10, and issue the first control data for controlling the production object to the control terminal 10.

Alternatively, as shown in Fig. 1, the management apparatus 11 comprises:
an access terminal 20, configured to receive the production data transmitted by the control terminal 10, and transmit the production data to the management platform 30;
the management platform 30, configured to receive and store the production data transmitted by the access terminal 20, and transmit the production data to a control model server 40 corresponding to the control terminal 10; and
the control model server 40, configured to receive the production data transmitted by the management platform 30.

Alternatively, the control model server 40 is further configured to transmit the first control data to the management platform 30;
the management platform 30 is further configured to receive and store the first control data transmitted by the control model server 40, and transmit the first control data to the access terminal 20; and
the access terminal 20 is further configured to receive the first control data transmitted by the management platform 30, and transmit the first control data to the control terminal 10.

Alternatively, the control model server 40 is further configured to generate second control data for controlling the production object according to the received production data, and transmit the second control data to the management platform 30;
the management platform 30 is further configured to receive and store the second control data transmitted by the control model server 40, and transmit the second control data to the access terminal 20;
the access terminal 20 is further configured to receive the second control data transmitted by the management platform 30, and transmit the second control data to the control terminal 10; and
the control terminal 10 is further configured to control the production object according to the received second control data.

Alternatively, the control terminal 10 is further configured to transmit a data query request to the access terminal 20;
the access terminal 20 is further configured to receive the data query request transmitted by the control terminal 10, and transmit the data query request to the management platform 30;
the management platform 30 is further configured to receive the data query request transmitted by the access terminal 20, and return the data requested to be queried by the data query request to the access terminal 20; and
the access terminal 20 is further configured to receive the data returned by the management platform 30, and return the data to the control terminal 10.

Alternatively, the control terminal 10 is further configured to transmit a control data update request to the access terminal 20;
the access terminal 20 is further configured to receive the control data update request transmitted by the control terminal 10, and transmit the control data update request to the management platform 30;
the management platform 30 is further configured to transmit the control data update request to the control model server 40, receive third control data returned by the control model server 40, and transmit the third control data to the access terminal 20;
the access terminal 20 is further configured to receive the third control data returned by the management platform 30, and return the third control data to the control terminal 10; and
the control terminal 10 is further configured to control the production object according to the received third control data.

Alternatively, the access terminal 20 is further configured to transmit an identity of itself and an identity of the control terminal 10 connected to itself to the management platform 30; and
the management platform 30 is further configured to receive and store the identity of the access terminal 20 and the identity of the control terminal 10 connected to the access terminal 20.

Alternatively, the access terminal 20 is further configured to receive an access request transmitted by the control terminal 10, which carries the identity of the control terminal 10, and transmit the access request to the management platform 30;
the management platform 30 is further configured to receive the access request transmitted by the access terminal 20, perform authentication according to the identity of the control terminal 10, and return an access response to the access terminal 20 after the authentication is successful; and
the access terminal 20 is further configured to receive the access response returned by the management platform 30, and transmit the access response to the control terminal 10.

In the above scheme, the control terminal 10 may be connected to the access terminal 20 via a serial bus, and the access terminal 20 may communicate with the management platform 30 through an Internet of Things communication protocol.

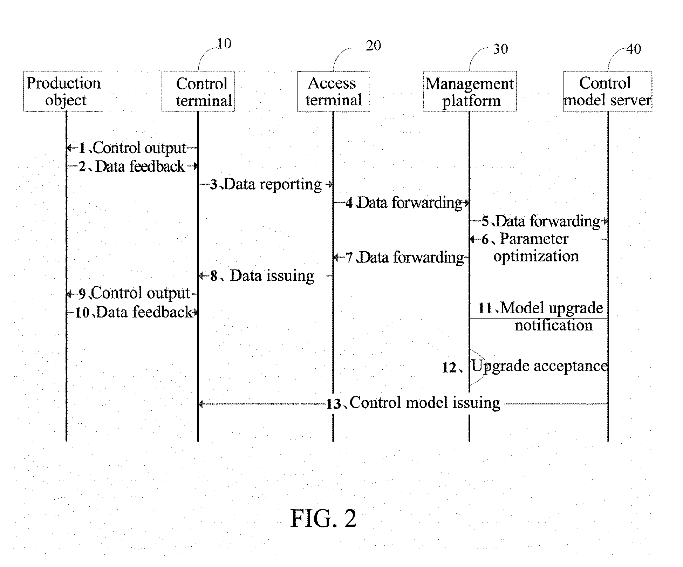

The industrial control system according to an embodiment of the present invention will be described in detail below in conjunction with Figs. 1 and 2.

The industrial control system according to an embodiment of the present invention is divided into a control layer, an access layer, a management layer, and a service layer. The implementation thereof is described as follows:
1. The control layer is comprised of a number of control terminals 10. Each control terminal 10 is allocated with a unique peripheral number as an identity of itself. When the industrial control system starts to operate, the control terminal 10 logs in the access terminal 20. Multiple control terminals 10 may access a management platform 30 of the Things of Internet through one access terminal 10 or multiple access terminals 20, so as to achieve field networking. In the production process, if a control manner selected by the control terminal 10 is local control, the control of the production object is completed by the control terminal 10 itself, and at the same time, the real-time production data (such as a temperature, a humidity, a voltage etc.) is regularly uploaded to the management platform 30 and the control model server 40 through the access terminal 20. If a manner selected by the control terminal 10 is network control, the control of the production object is completed by the control model server 40, the control terminal 10 uploads the real-time production data to the control model server 40, and the control data is returned by the control model server 40 to the control terminal 10. The control data includes the control model and parameters in the control model. The control terminal 10 controls the production object according to the received control model and the parameters.
   The control terminal 10 is responsible for controlling the production object, and is not responsible for processes such as analysis and storage of the production data, optimization of the control model etc. The production data generated in the production process is input into the control terminal 10. The control terminal 10 directly performs calculation through the obtained control model, to obtain the output control quantity, and then controls the production object. At the same time, these production data is transmitted to the access terminal 20 through the Things of Internet, and is finally transmitted by the access terminal 20 to the management platform 30 and the control model server 40. In addition, various parameters in the control model are mostly set manually by experience in the traditional industrial control system, which largely depends on the technical capability of an operator, and wastes a lot of time in the production debug phase. The parameters of the control model of the control terminal 10 according to the embodiment of the present invention are directly given by the control model server 40, and at the same time, better parameters are calculated according to the feedback of the production data in the debug production process and are issued to the control terminal 10.
   The control terminal 10 may communicate with the access terminal 20 in a simple wiring and communication manner such as serial bus transmission etc. The function of the control terminal 10 is comprised of two parts, i.e., a basic functional part (including human-computer interaction and basic communication etc.) and a control strategy part (the control model and parameters etc.). The control strategy part may apply to the control model server 40 at any time for downloading an updated control model.
2. The access layer is comprised of the access terminal 20. The access terminal 20 acts as a bridge between the control terminal 10 and the Things of Internet, integrates the Things of Internet communication protocol, and is responsible for accessing the control terminal 10 to the Things of Internet, to achieve conversion and transmission of the protocol between the Things of Internet and the control terminal 10. The access terminal 20 also has a unique number as an identity of itself. When the access terminal 20 logs in the management platform 30, it transmits the number of itself and numbers of various control terminals 10 connected to itself to the management platform 30 for authentication and recording. In the production process, if there a newly added control terminal 10, a number of the newly added control terminal 10 may also be transmitted to the management platform 30 for recording.
   The access terminal 20 is not responsible for the control process, and is responsible for maintaining an access state of the control terminal 10, message forwarding, protocol conversion etc. The access terminal 20 supports access of multiple control terminals 10. The access terminal 20 and the management platform 30 use the Things of Internet general protocol. The access terminal 20 encapsulates the data of the control terminal 10 into Things of Internet protocol data for transmission.
3. The management layer is comprised of the management platform 30, and its function is to manage all control terminals and the access terminal which access to the Things of Internet. Related information of the access terminal 20 and all control terminals 10 mounted below the access terminal 20 may be viewed on the management platform. The related information includes the control model and parameters, real-time production data, a production operating state etc.
   The management platform 30 has the following functions:
   (1) a data query function: providing query of operating states, operation states, and access states etc. of all access terminals 20 accessing to the management platform 30 and various control terminals 10 belonging to the access terminals 20; providing query of real-time production data in the production process of various control terminals 10, query of historical production data, and query of production process curves etc. The operator may globally hold the production process information through the management platform 30.
   (2) a control model update prompt function: when the management platform 30 discovers that a certain control terminal 10 has a control model which may be optimized, the update may be prompted to the management platform 30.
   (3) a control model selection function: for some control processes of which the requirements for real-time are not high, the control terminal 10 may selectively transmit the production data to the control model server 40 directly, and perform control according to the control model issued by the control model server 40. For control processes of which the requirements for real-time are high, the control may selectively be performed through the control terminal 10 directly.
   (4) a system management function and an account authentication function: these functions are responsible for authenticating whether the control model server 40 and the control server 10 have access to the Things of Internet etc.
4. The server layer is comprised of a number of control model servers 40, which are responsible for providing control models. The control models provided by different control model servers 40 are also different. The control terminal 10 may select a control model provided by a particular control model server 40 according to a production object which is actually controlled by itself. At the same time, the control model sever 40 is different from an embedded device such as the control terminal 10 etc., which has a powerful calculation capability, and can analyze the collected real-time production data, thereby optimizing the control model which is provided by itself, and notifying the management platform that there is an updated control model.

Before the production process starts, the control model server 40 accepts a request from the control terminal 10, issues the control model to which the control terminal 10 belongs, and automatically optimizes the parameters of the control model according to the production data reported in the debug process and issues the parameters to the control terminal 10, and at the same time, records the parameters at this time. If there is another control terminal 10 which requests for the same control model, the control model and the parameters at this time may be directly transmitted to the control terminal 10. In the operation process, the control terminal 10 regularly uploads the real-time production data to the management platform 30 and the control model server 40. The control model server 40 analyzes the production data, and then optimizes the control model. When there is an optimized control model, a result may be notified to the management platform 30 to prompt that there is an upgraded control model for download.

In addition to optimization of the control model, the control model server 40 may also issue the control model and the parameters to the control terminal 10, for control of the control terminal 10.

After the control terminal 10 changes the controlled production object, the operator may query a control model which is suitable for the production object through the management platform 30, and change the control model server 40 corresponding to the control terminal 10 to reload the control model.

Fig. 2 is a diagram of data transmission of an industrial control system according to an embodiment of the present invention. As shown in Fig. 2, after the industrial control system starts to operate, the control terminal 10 controls the production process of the production object, collects the production data in the production process, and reports the production data to the access terminal 20. The access terminal 20 forwards the production data to the management platform 30. The management platform 30 forwards the production data to the control model server 40 corresponding to the control terminal 10. The control model server 40 optimizes the parameters of the control model according to the received production data, and transmits the optimized parameters to the management platform 30. The management platform 30 forwards the received parameters to the access terminal 20. The access terminal 20 issues the received parameters to the control terminal 10. The control terminal 10 controls the production process of the production object according to the received parameters, and collects the production data in the production process. After the control model server 40 optimizes the control model, it prompts the management platform 30 that there is an optimized control model. After the management platform 30 receives the prompt of upgrade of the control model, the control model server 40 may issue the optimized control model to the control terminal 10 through the management platform 30 and the access terminal 20.

In the embodiment of the present invention, a networking mode of the traditional industrial control system is changed, and the traditional industrial network is substituted with the communication network, so that the networking manner is more convenient; the production data is not limited to be stored locally and transmitted, and the production data can be uploaded to a unified management platform through the communication network, which facilitates unified management, so that larger-scale cluster production becomes possible; and a unified communication protocol is used between the control terminal and the access terminal, the access terminal and the management platform, and the management platform and the control model server, to enable various types of production networks to communicate with each other, which facilitates compatibility of the production networks.

In addition, in the embodiment of the present invention, the control mode is different from the control mode in the traditional industrial control system. The control terminal may apply to the control model server for downloading the updated control model according to actual requirements at any time, thereby expanding universality and saving the cost. At the same time, the control terminal transmits the production data to the control model server, to enable the control model server to optimize the control model according to the production data, thereby facilitating better and more fully controlling the production.

A person having ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented by one or more integrated circuits. Accordingly, each module/unit in the above embodiments can be implemented in a form of hardware, or can also be implemented in a form of software functional module. The embodiments of the present invention are not limited to any particular form of a combination of hardware and software.

The above description is preferable implementations of the embodiments of the present invention. It should be illustrated that a person having ordinary skill in the art can make a number of improvements and modifications without departing from the principle described in the embodiments of the present invention, and these improvements and modifications should also be construed as belonging to the protection scope of the present invention.

### Industrial Applicability

In the scheme of the embodiments of the present invention, the networking manner is more convenient; the production data can be uploaded to a unified management platform through the communication network, which facilitates unified management, so that larger-scale cluster production becomes possible; and a unified communication protocol is used to enable various types of production networks to communicate with each other, which facilitates compatibility of the production networks.

## Claims

1. An industrial control system, comprising: a control terminal and a management apparatus, wherein,
the control terminal is configured to collect production data of a production object in a production process, and transmit the production data to the management apparatus; and receive first control data transmitted by the management apparatus, and control the production object according to the first control data; and
the management apparatus is connected with the control terminal via the Internet of Things, and is configured to receive and store the production data transmitted by the control terminal, and issue the first control data for controlling the production object to the control terminal.

2. The industrial control system according to claim 1, wherein, the management apparatus comprises an access terminal, a management platform, and a control model server; the access terminal is configured to receive the production data transmitted by the control terminal, and transmit the production data to the management platform;
the management platform is configured to receive and store the production data transmitted by the access terminal, and transmit the production data to a control model server corresponding to the control terminal; and
the control model server is configured to receive the production data transmitted by the management platform.

3. The industrial control system according to claim 2, wherein,
the control model server is further configured to transmit the first control data to the management platform;
the management platform is further configured to receive and store the first control data transmitted by the control model server, and transmit the first control data to the access terminal; and
the access terminal is further configured to receive the first control data transmitted by the management platform, and transmit the first control data to the control terminal.

4. The industrial control system according to claim 2, wherein,
the control model server is further configured to generate second control data for controlling the production object according to the received production data, and transmit the second control data to the management platform;
the management platform is further configured to receive and store the second control data transmitted by the control model server, and transmit the second control data to the access terminal;
the access terminal is further configured to receive the second control data transmitted by the management platform, and transmit the second control data to the control terminal; and
the control terminal is further configured to control the production object according to the received second control data.

5. The industrial control system according to claim 2, wherein,
the control terminal is further configured to transmit a data query request to the access terminal;
the access terminal is further configured to receive the data query request transmitted by the control terminal, and transmit the data query request to the management platform;
the management platform is further configured to receive the data query request transmitted by the access terminal, and return the data requested to be queried by the data query request to the access terminal; and
the access terminal is further configured to receive the data returned by the management platform, and return the data to the control terminal.

6. The industrial control system according to claim 2, wherein,
the control terminal is further configured to transmit a control data update request to the access terminal;
the access terminal is further configured to receive the control data update request transmitted by the control terminal, and transmit the control data update request to the management platform;
the management platform is further configured to transmit the control data update request to the control model server, receive third control data returned by the control model server, and transmit the third control data to the access terminal;
the access terminal is further configured to receive the third control data returned by the management platform, and return the third control data to the control terminal; and
the control terminal is further configured to control the production object according to the received third control data.

7. The industrial control system according to claim 2, wherein,
the access terminal is further configured to transmit an identity thereof and an identity of the control terminal connected thereto to the management platform; and
the management platform is further configured to receive and store the identity of the access terminal and the identity of the control terminal connected to the access terminal.

8. The industrial control system according to claim 7, wherein,
the access terminal is further configured to receive an access request carrying the identity of the control terminal transmitted by the control terminal, and transmit the access request to the management platform;
the management platform is further configured to receive the access request transmitted by the access terminal, perform authentication according to the identity of the control terminal, and return an access response to the access terminal after the authentication is successful; and
the access terminal is further configured to receive the access response returned by the management platform, and transmit the access response to the control terminal.

9. The industrial control system according to claim 3, wherein, the control terminal is connected to the access terminal via a serial bus.

10. The industrial control system according to claim 3, wherein, the access terminal communicates with the management platform through an Internet of Things communication protocol.

11. A management apparatus, comprising: an access terminal, a management platform, and a control model server, wherein,
the access terminal is configured to receive production data transmitted by the control terminal, transmit the production data to the management platform, receive first control data for controlling the production object transmitted by the management platform, and transmit the first control data to the control terminal;
the management platform is configured to receive and store the production data transmitted by the access terminal, transmit the production data to a control model server corresponding to the control terminal, receive and store the first control data transmitted by the control model server, and transmit the first control data to the access terminal; and
the control model server is configured to receive the production data transmitted by the management platform, generate the first control data according to the generated data, and transmit the first control data to the management platform.

12. The management apparatus according to claim 11, wherein,
the control model server is further configured to generate second control data for controlling the production object according to the received production data, and transmit the second control data to the management platform;
the management platform is further configured to receive and store the second control data transmitted by the control model server, and transmit the second control data to the access terminal; and
the access terminal is further configured to receive the second control data transmitted by the management platform, and transmit the second control data to the control terminal.

13. The management apparatus according to claim 11, wherein,
the access terminal is further configured to receive a data query request transmitted by the control terminal, and transmit the data query request to the management platform;
the management platform is further configured to receive the data query request transmitted by the access terminal, and return the data requested to be queried by the data query request to the access terminal; and
the access terminal is further configured to receive the data returned by the management platform, and return the data to the control terminal.

14. The management apparatus according to claim 11, wherein,
the access terminal is further configured to receive a control data update request transmitted by the control terminal, and transmit the control data update request to the management platform;
the management platform is further configured to transmit the control data update request to the control model server, receive third control data returned by the control model server, and transmit the third control data to the access terminal; and
the access terminal is further configured to receive the third control data returned by the management platform, and return the third control data to the control terminal.

15. The management apparatus according to claim 11, wherein,
the access terminal is further configured to transmit an identity thereof and an identity of the control terminal connected thereto to the management platform; and
the management platform is further configured to receive and store the identity of the access terminal and the identity of the control terminal connected to the access terminal.

16. The management apparatus according to claim 11, wherein,
the access terminal is further configured to receive an access request carrying the identity of the control terminal transmitted by the control terminal, and transmit the access request to the management platform;
the management platform is further configured to receive the access request transmitted by the access terminal, perform authentication according to the identity of the control terminal, and return an access response to the access terminal after the authentication is successful; and
the access terminal is further configured to receive the access response returned by the management platform, and transmit the access response to the control terminal.
